# EUROPÄISCHE PATENTSCHRIFT

(11) **EP 2 288 460 B1**
(45) Veröffentlichungstag und Bekanntmachung des Hinweises auf die Patenterteilung: **13.11.2013**
(21) Anmeldenummer: 09776741.2
(22) Anmeldetag: 16.06.2009
(51) Int. Cl.: B23D 15/12, F16F 1/373

(54) **MASCHINENGESTELL FÜR EINE SCHLAGSCHNEIDEVORRICHTUNG UND SCHLAGSCHNEIDEVORRICHTUNG MIT EINEM SOLCHEN**
MACHINE FRAME FOR AN IMPACT CUTTING DEVICE AND IMPACT CUTTING DEVICE HAVING THE SAME
BÂTI DE MACHINE POUR DISPOSITIF DE COUPE PAR IMPACT, ET DISPOSITIF DE COUPE PAR IMPACT COMPORTANT UN TEL BÂTI

(30) Priorität: 16.06.2008 DE 102008028276
(43) Veröffentlichungstag der Anmeldung: 02.03.2011
(73) Patentinhaber: Schuster Maschinenbau GmbH, 86920 Denklingen (DE)
(72) Erfinder: SCHUSTER, Helmut, 86920 Denklingen (DE)
(74) Vertreter: Mollekopf, Gerd Willi
(86) Internationale Anmeldenummer: PCT/EP2009/004331
(87) Internationale Veröffentlichungsnummer: WO 2010/003516

(56) Entgegenhaltungen:
- WO-A1-2004/078396
- WO-A1-2006/036095
- GB-A- 772 419
- GB-A- 1 047 883
- US-A- 3 466 960
- US-A- 6 129 326

## Beschreibung

Die Erfindung betrifft ein Maschinengestell für eine Schlagschneidevorrichtung und eine Schlagschneidevorrichtung mit einem solchen Maschinengestell. Ein Maschinengestell mit den Merkmalen des Oberbegriffes des Anspruchs 1 wird in dem US 3466960 A gezeigt.

Bei der Bearbeitung von Werkstücken mit einer Schlagschneidemaschine fängt bei jedem Trennschlag u.a. das Maschinengestell der Schlagschneidemaschine die nicht zum Trennen umgesetzte, überschüssige Impulsenergie zumindest teilweise auf Die hohe Schlagwiederholung und die kurzzeitige, schlagartige Krafteinwirkung jedes Trennschlags bewirkt eine hohe Belastung des Materials und insbesondere der Verbindungsstellen, z.B. der Schweißnähte, des Maschinengestells. Zudem wird das Maschinengestell aufgrund der durch den Trennschlag verursachten Vibrationen und Schwingungen, die sich im Maschinengestell ausbreiten, hohen Belastungen ausgesetzt, die die Lebensdauer des Maschinengestells verringern. Aus der EP 1 601 484 B1 ist eine Schlagschneidevorrichtung bekannt, die eine Entkopplung zwischen einer Beschleunigungseinheit auf einem Ständer des Maschinengestells und einem Schlagelement während eines Trennschlages vorsieht. Die vorliegende Erfindung ist eine Weiterentwicklung der Schlagschneidevorrichtung der EP 1 601 484 B1.

Die US 3,466,960 A offenbart eine Vorrichtung zum Schneiden von Gussblöcken. Eine Stoßkammer ist mittels eines Stabs mit einer beweglichen Platte, die eine Schneidklinge aufweist, verbunden. Beim Auslösen der Stoßkammer wird ein Stab mit einer weiteren Schneidklinge in Richtung Block beschleunigt, wobei durch den Rückstoß der Kammer, die mit ihr verbundene Platte mit Klinge ebenfalls in Richtung Block beschleunigt wird. Damit wird der zwischen den Klingen angeordnete Block von beiden Seiten her geschnitten. Die Anordnung ist auf einem Rahmen angeordnet, der auf einer Seite mit einem Gelenk am Untergrund und auf der anderen Seite an einem Zylinder befestigt ist. Dadurch ist während des Schneidvorgangs eine Auslenkung des Rahmens samt Schneidklingen möglich, wodurch die seitliche Druckbelastung der Klingen durch die kontinuierliche Zufuhr des Blocks verringert wird. Zwischen einer feststehenden Platte und der beweglichen Platte ist ein Gummidämpfer angeordnet.

Die WO 2006/036095 A1 schlägt ein Querschneidwerkzeug mit Schlageinheit einem Werkzeuggehäuse und einem Dämpfer vor. Ein Schlagkolben wird nach oben mittels der Schlageinheit auf ein bewegliches Querschneidewerkzeug beschleunigt, um einen Stab zu schneiden. Vorsprünge am Gehäuse weisen Passbolzen auf, die mit Gummipuffern versehen sind. Die Passbolzen sind so ausgelegt, dass sie in entsprechende Löcher einer Querschneidemaschine (nicht dargestellt) passen und somit eine Befestigung des Querschneidwerkzeugs in einer horizontalen Ebene der Maschine ermöglichen. Die Gummipuffer erlauben eine gewisse Federung in vertikaler Richtung und gewährleisten damit Schallisolation und Vibrationsdämpfung während des Schneidvorgangs.

Es ist Aufgabe der Erfindung, ein Maschinengestell für eine Schlagschneidevorrichtung, bzw. eine Schlagschneidevorrichtung mit einem solchen Maschinengestell, vorzusehen, das weiter verbesserte Standzeiten und hohe Zuverlässigkeit bei häufiger Schlagwiederholung aufweist.

Diese Aufgabe wird mit den Merkmalen des Anspruchs 1 bzw. 15 gelöst.

Vorteilhafte Ausgestaltungen sind Gegenstand der Unteransprüche.

Gemäß Anspruch 1 wird ein Maschinengestell für eine Schlagschneidevorrichtung bereitgestellt mit einem Werkzeugstützblock, einem Ständer für eine Antriebseinheit und Verbindungseinrichtungen zur dämpfenden Verbindung des Werkzeugstützblocks mit dem Ständer. Die Antriebseinheit kann vorteilhaft eine Beschleunigungseinheit der Schlagschneidevorrichtung sein.

Mittels der Verbindungseinrichtungen wird die Schwingungsübertragung von Werkzeugstützblock auf den Ständer (oder umgekehrt) verringert, d.h. es werden Vibrationen oder Schwingungen abgedämpft bevor sie auf den Ständer übertragen werden können und im Ergebnis der Werkzeugstützblock vom Ständer entkoppelt. Eine solche Entkopplung zwischen Werkzeughalteblock und Ständer ist bei einer Schlagschneidevorrichtung besonders vorteilhaft, da aufgrund der hohen Schlagwiederholung und der kurzeitigen, hohen Krafteinwirkung jedes Trennschlags eine hohe Belastung des Maschinengestells entsteht.

Mittels der Verbindungseinrichtungen ist der Werkzeugstützblock vom Ständer schwingungsentkoppelt oder im Wesentlichen schwingungsentkoppelt. Beim Trennvorgang werden durch Auftreffen eines Schlagelements auf ein auf dem Werkzeugstützblock lagerndes Werkzeug Vibrationen und Schwingungen erzeugte. Diese Schwingungen werden durch die dämpfenden Verbindungseinrichtungen nicht oder nur in geringem Umfang vom Werkzeugstützblock auf den Ständer übertragen. Die Schwingungen werden durch die Verbindungseinrichtungen zumindest so weit abgedämpft bzw. abgeschwächt, dass kaum noch Belastungen für den Ständer bzw. das Maschinengestell auftreten.

Der Werkzeugstützblock und der Ständer sind nicht-metallisch und/oder nicht starr miteinander verbunden oder gekoppelt. Vorzugsweise nicht miteinander verschweißt oder auf eine andere nicht-dämpfende Weise miteinander verbunden.

Ein Werkzeugstützblock kann ein Matrizenblock sein, d.h. der Block bietet eine Auflage bzw. eine Lagerfläche für eine Schneideinheit zum Aufnehmen und Trennen eines Werkstücks, insbesondere eine Schneideinheit wie in der EP 1 601 484 B1 offenbart.

Eine am Ständer angebrachte Antriebseinheit bzw. Beschleunigungseinheit dient als Antrieb für ein Schlagelement, dass zum Schlagschneiden gegen ein auf dem Werkzeugstützblock lagerndes Werkzeug (z.B. eine Schneideinheit) beschleunigt wird. Vorzugsweise weist der Ständer eine Längsrichtung auf, die die Schlagrichtung eines Schlagelements, z.B. eines Hammers, festlegt, beispielsweise durch in Längsrichtung des Ständers angebrachte Führungen für das Schlagelement.

Vorzugsweise ist der Werkzeugstützblock seitlich vom Ständer angeordnet und eine Vorderseite bzw. Seitenfläche des Ständers ist mit dem Werkzeugstützblock verbunden.

Auf diese Weise bleibt eine Werkzeuglagerfläche des Werkzeugstützblocks frei zugänglich. Beispielsweise kann so die gesamte Oberseite des Werkzeugstützblocks als Auflage für ein Werkzeug verwendet werden.

Bevorzugt ist eine Verbindungsrichtung bzw. eine Verbindungsachse zumindest einer Verbindungseinrichtung senkrecht oder im Wesentlichen senkrecht zur Seitenfläche des Ständers ausgerichtet. Das heißt, bei Ausrichtung der Schlagrichtung entlang der Seitenfläche des Ständers, verläuft die Verbindungsachse der Verbindungseinrichtung senkrecht zur Schlagrichtung der Schlagschneidevorrichtung.

Weiter bevorzugt ist der Ständer auf dem Werkzeugstützblock angeordnet und eine Unterseite des Ständers mit dem Werkzeugstützblock mittels der Verbindungseinrichtungen verbunden. Insbesondere ist der Ständer auf der Werkzeuglagerfläche des Werkzeugstützblocks angeordnet, wobei bevorzugt die Verbindungsachse der Verbindungseinrichtung senkrecht oder im Wesentlichen senkrecht zu der Werkzeuglagerfläche verläuft.

Vorzugsweise ist die zumindest eine Verbindungseinrichtung entweder mit dem Werkzeugstützblock oder dem Ständer kraft-, form- und/oder stoffschlüssig verbunden, insbesondere mittels einer Schraub- und/oder Klemmverbindung, das heißt die Verbindungseinrichtung ist nur einseitig fest bzw. starr mit dem Werkzeugstützblock oder dem Ständer verbunden. Vorzugsweise ist einen zweite Seite oder ein zweites Ende der zumindest einen Verbindungseinrichtung mit dem Ständer oder dem Werkzeugstützblock nicht starr verbunden, d.h. flexibel verbunden, insbesondere mit ein Spiel, das relative Bewegungen zwischen Werkzeugstützblock und Ständer ausgleichen kann.

Weiter bevorzugt weist die Verbindungseinrichtung zumindest ein erstes Dämpfungselement auf, das zwischen oder im Wesentlichen zwischen Werkzeugstützblock und Ständer angeordnet ist. Das zumindest eine Dämpfungselement nimmt zumindest einen Teil der auftretenden Schwingungsenergie auf und verhindert, beispielsweise durch das Umwandeln der Energie in Wärme, dass die Schwingungen über die Verbindungseinrichtung vom Werkzeugstützblock auf den Ständer übertragen werden. Dabei bildet das zumindest eine erste Dämpfungselement vorzugsweise einen Abstandshalter zwischen Ständer und Werkzeugstützblock und verhindert damit deren direkten (z.B. metallischen) Kontakt. Das zumindest eine Dämpfungselement kann derart ausgestaltet sein, dass es sich über die gesamte Fläche zwischen Werkzeugstützblock und Ständer erstreckt oder sich nur über einen Teil der Fläche erstreckt.

Vorzugsweise erstreckt sich das zumindest eine erste Dämpfungselement und/oder zumindest ein zweites Dämpfungselement auf eine vom Werkzeugstützblock abgewandte Seite oder Innenfläche des Ständers. Wenn beispielsweise die Verbindungseinrichtung eine Beilagscheibe zum Gegenhalten der Verbindungseinrichtung gegen den Ständer aufweist, liegt das Dämpfungselement oder ein Teil desselben zwischen dem Ständer und der Beilagscheibe. Dadurch wird der direkte (metallische) Kontakt zwischen Ständer und Beilagscheibe verhindert und Schwingungen/Vibrationen zwischen denselben gedämpft, wodurch die Entkopplung des Ständers vom Werkzeugstützblock weiter verbessert wird.

Weiter bevorzugt erstreckt sich das zumindest eine erste Dämpfungselement und/oder das zumindest eine zweite Dämpfungselement zumindest teilweise entlang eines Umfangs der zumindest einen Verbindungseinrichtung. Beispielsweise weist die Verbindungseinrichtung einen mit elastischem Material ummantelten Zapfen oder Bolzen auf.

Vorzugsweise ist zumindest eines der vorgehend beschriebenen Dämpfungselemente aus einem elastischen Material ausgebildet, beispielsweise einem gummiartigen Material, oder ist ein Dämpfungskissen aus Metall.

Vorzugsweise ist der Werkzeugstützblock auf einer Grundplatte gelagert oder weist eine Grundplatte auf. Weiter bevorzugt ist der Ständer auf einer Grundplatte schwingungsentkoppelt gelagert, wobei vorzugsweise zwischen der Grundplatte und dem Ständer zumindest eine weitere dämpfende Verbindungseinrichtung mit weiteren Dämpfungselementen angeordnet ist. Auf diese Weise werden Schwingungen oder Vibrationen von der Grundplatte bzw. dem Werkzeugstützblock nicht auf den Ständer, oder umgekehrt, übertragen, sondern von der weiteren Verbindungseinrichtung bzw. deren Dämpfungselementen abgedämpft. Um eine Übertragung von Schwingungen auf einen Untergrund (Werkshallenboden) zu verringern, und um damit die Lärmbelastung der Umgebung ebenfalls zu verringern, können zusätzliche Dämpfungselemente, z.B. Metalldämpfer, zwischen Grundplatte und Untergrund angeordnet werden.

Vorzugsweise weist die zumindest eine weitere Verbindungseinrichtung zwischen Ständer und Grundplatte zumindest eine Tellerfeder, ein Dämpfungskissen, insbesondere aus Metall, und/oder ein Federelement auf. Insbesondere weist das Maschinengestell dämpfende Fußelemente auf, um die Schwingungsübertragung auf einen Untergrund des Maschinegestells weiter zu verringern.

Gemäß Anspruch 19 wird eine Schlagschneidevorrichtung mit einem wie zuvor beschriebenen Maschinengestell beansprucht.

Anhand der Figuren wird eine Ausführungsform der Erfindung näher erläutert. Es zeigen:
- Fig. 1: die Seitenansicht eines Maschinengestells;
- Fig. 2: die Detailansicht einer Verbindungseinrichtung von Fig. 1;
- Fig. 2a: die Detailansicht eines Elements der Verbindungseinrichtung von Fig. 2; und
- Fig. 3: die Rückansicht des Maschinengestells von Fig. 1.

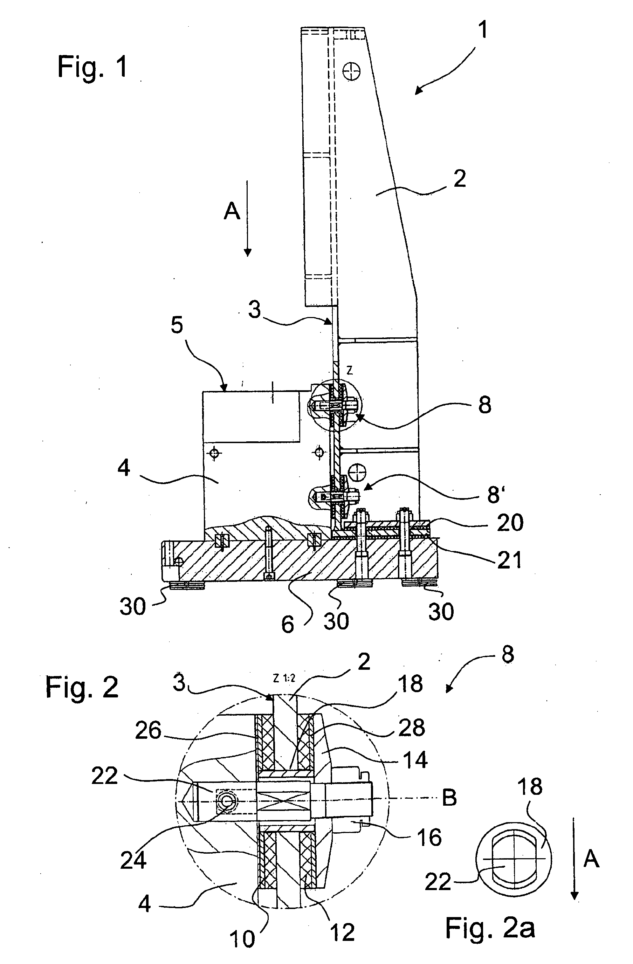

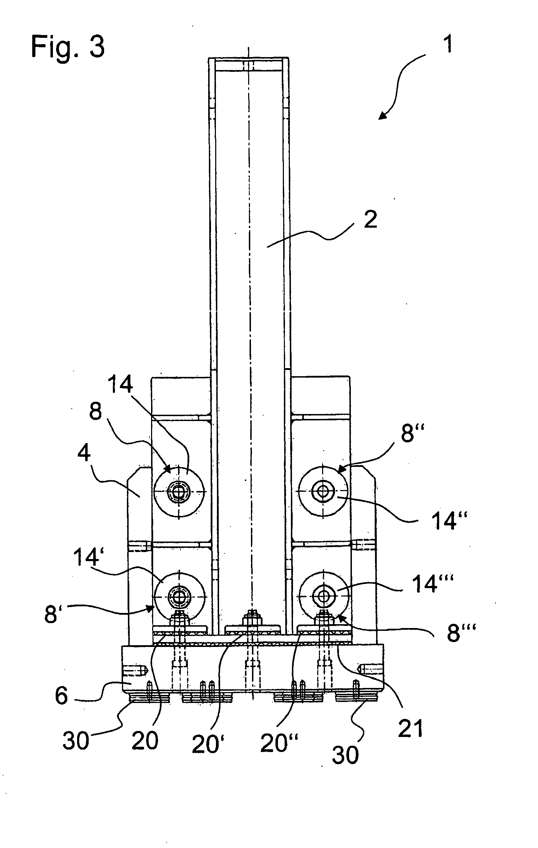

Fig. 1 zeigt ein Maschinengestell 1 gemäß einer bevorzugten Ausgestaltung in Seitenansicht. Ein Stützblock 4 (Matrizenstützblock oder Amboss) ist seitlich mit einem Ständer 2 des Maschinengestells 1 verbunden. Die Schlagrichtung A einer Beschleunigungseinheit für einen Hammer (nicht dargestellt) ist mit einem Pfeil dargestellt und liegt senkrecht oder im Wesentlichen senkrecht zu einer Oberseite 5 bzw. Werkzeuglagerfläche des Stützblocks 4. Mittels Verbindungseinrichtungen 8, 8', 8", 8"' (siehe Fig. 3) ist eine Verbindung zwischen einer Seitenfläche 3 des Ständers 2 mit dem Stützblock 4 hergestellt. Der Stützblock 4 ist auf einer Grundplatte 6 angeordnet und fest, d. h. starr bzw. nicht dämpfend, mit der Grundplatte 6 verbunden. Aus der Masse der Grundplatte 6 und des Stützblocks 4 ergibt sich das sogenannte Amboss-Gewicht. Der Ständer 2 des Maschinengestells ist mit der Grundplatte 6 mittels weiterer dämpfender Verbindungseinrichtungen mit weiteren Dämpfungselementen 20, 21 verbunden. Dadurch werden Vibrationen und Schwingungen der Grundplatte 6 bzw. des Stützblocks 4 während des Betriebes der Schlagschneidemaschine nicht oder im Wesentlichen nicht auf den Ständer 2 übertragen. Auf den Stützblock 4 ausgeübte Stöße bzw. Schwingungen dürfen nicht auf den Ständer 2 übertragen werden, da dadurch Anbauteile am Ständer 2, wie z.B. Motoren, Gebersysteme und Sensoren, Schaden nehmen würden. Die Geräusch- bzw. Lärmentwicklung, die sich insbesondere aus der hohen Schlagwiederholung und den hohen Impulsen der Trennschläge ergibt, wird durch die weiteren Verbindungseinrichtung mit den weiteren Dämpfungselementen 20, 21 deutlich verringert. Zwischen Grundplatte 6 und Untergrund sind Metalldämpfer 30 angeordnet, um Schwingungen vom Untergrund fernzuhalten und damit die Lärmbelästigung zu verringern.

Das Maschinengestell 1, insbesondere der Stützbock 4, weist eine hohe Masse auf, um trotz der hohen Impulseinwirkung und der hohen Schlagwiederholung einen ruhigen Stand des Maschinengestells 1 zu gewährleisten. Das Gewicht des Stützblocks 4 beträgt mindestens 1 Tonne, vorzugsweise mindestens 3 oder 5 Tonnen.

Fig. 2 zeigt eine Detailansicht einer der Verbindungseinrichtungen 8 von Fig. 1 bzw. Fig. 3. Die Verbindungseinrichtung 8 weist einen Bolzen 22 auf, der durch eine Öffnung in der Vorderwand 3 bzw. Seitenwand des Ständers 2 bis in den Stützblock 4 hineinreicht. Der Bolzen 22 ist am Stützblock 4 formschlüssig mit einem quer zur Verbindungsrichtung B liegenden Stift bzw. Splint 24 befestigt bzw. gesichert. Messungen zeigen, dass sich bei einem Trennschlag ein Versatz zwischen Ständer 2 und Stützblock 4 von etwa 0,1-0,2 mm ergibt. Des Weiteren weist die Verbindungseinrichtung 8 ein zwischen dem Stützblock 4 und dem Ständer 2 angeordnetes Dämpfungselement 10 bzw. Dämpfungskissen auf, das zusätzlich zu seinen Dämpfungseigenschaften als Abstandshalter zwischen Stützblock 4 und Ständer 2 dient und so deren direkten (metallischen) Kontakt verhindert. Des Weiteren weist die Verbindungseinrichtung 8 eine Beilagscheibe 14 und eine Mutter 16 auf, mittels derer mit Hilfe des Bolzens 22 der Ständers 2 bzw. die Seitenwand 3 gegen den Stützblock 4 gepresst wird. Zwischen der Beilagscheibe 14 und dem Ständer 2 ist ein zweites Dämpfungselement 12 angeordnet, das Schwingungen abdämpft, die über den Bolzen 22 und die Beilagscheibe 14 vom Stützblock 4 auf den Ständer 2 übertragen werden können.

Des Weiteren weist die Verbindungseinrichtung 8 ein Zentrierelement 18 auf, das am Innenumfang der Öffnung in der Seitenwand 3 angeordnet ist und eine seitliche Zentrierung (senkrecht zur Schlagrichtung A) des Ständers 2 zum Stützblock 4 gewährleistet. Wie in Fig. 2a dargestellt weist das Zentrierelement 18 ein Langloch in Schlagrichtung A auf, um in dieser (Dämpfungs-)Richtung einen Spielraum für den Bolzen 22 zu schaffen. Senkrecht zur Schlagrichtung A erhält das Zentrierelement 18 durch genaue Passung die Position des Bolzens 22 und damit des Stützblocks 4, da seitliche Bewegung Ungenauigkeiten am getrennten Werkstück verursachen würde. Die Verbindungseinrichtung 8 weist zudem Gleitscheiben 26, 28 auf, die zwischen Stützblock 4 und Ständer 2 bzw. Ständer 2 und Beilagscheibe 14 angeordnet sind. Bei einer Bewegung des Stützblocks/der Beilagscheibe gegen den Ständer 2 wird durch die Gleitscheiben 26, 28 Reibung und Abrieb zwischen den Bauteilen verhindert bzw. minimiert. Des weiteren hält das Zentrierelement 18 die Dämpfungselemente 10, 12 und Gleitscheiben 26, 28 auf ihrer Position. Bei Vorsehen von mehreren Verbindungseinrichtungen 8 ist bei einem Teil der Verbindungseinrichtungen das Zentrierelement mit einer Bohrung (nicht dargestellt) versehen, die größer ist als der Durchmesser des Bolzens 22, um eine Überbestimmung zu vermeiden. Durch das oben beschriebene Spiel des Zentrierelements (Langloch bzw. größere Bohrung) in Bezug auf den Bolzen 22 wird verhindert, dass durch den oben beschriebenen Versatz während eines Trennschlags der Bolzen 22 von der Innenkante der Öffnung der Seitenwand 3 beschädigt wird.

Fig. 3 zeigt die Rückansicht des Maschinengestells von Fig. 1. Es werden vier Verbindungseinrichtungen 8, 8', 8", 8'" bereitgestellt, um den Stützblock 4 einerseits stabil mit dem Ständer 2 zu verbinden und andererseits eine wie oben beschriebene dämpfende Verbindung bereitzustellen. Insbesondere weisen beispielsweise die Verbindungseinrichtungen 8, 8' ein Zentrierelement 18 mit der oben beschriebenen seitlichen Führung des Bolzens 22 auf, wobei die verbleibenden Verbindungseinrichtungen 8", 8'" eine größere Bohrung aufweisen, um eine Überbestimmung zu vermeiden. Die weiteren Verbindungseinrichtungen, die den Ständer 2 mit der Grundplatte 6 verbinden, weisen ein durchgehendes Dämpfungselement 21 auf, d.h. das Dämpfungselement 21 bedeckt die gesamte Kontaktfläche zwischen Ständer 2 und Grundplatte 6. Die weiteren Dämpfungselemente 20, 20', 20" sind unter Beilagscheiben des Weiteren Verbindungseinrichtungen angeordnet.

Mittels der Verbindungseinrichtungen 8, 8', 8", 8'" wird der Stützblock 4 vom Ständer 2 und durch die weitere dämpfende Verbindungseinrichtung der Ständer 2 von der Grundplatte 6 schwingungsentkoppelt oder im Wesentlichen schwingungsentkoppelt. Aus dieser Entkopplung ergibt sich eine höhere Lebensdauer des Maschinengestells und Wartungszeiten und Wartungsarbeiten am Maschinengestell und einer Schlagschneidemaschine mit einem solchen Maschinengestell sind stark reduziert, woraus sich wiederum Kosteneinsparungen ergeben.

### Bezugszeichenliste

- 1: Maschinengestell
- 2: Ständer
- 3: Vorderwand
- 4: Stützblock
- 5: Oberseite
- 6: Grundplatte
- 8, 8', 8", 8"': Verbindungseinrichtung
- 10: erstes Dämpfungselement
- 12: zweites Dämpfungselement
- 14, 14', 14", 14"': Beilagscheibe
- 16: Mutter
- 18: Zentrierelement
- 20, 20', 20", 21: weitere Dämpfungselemente
- 22: Bolzen
- 24: Splint
- 26, 28: Gleitscheiben
- 30: Metalldämpfer

- A: Schlagrichtung
- B: Verbindungsachse

## Patentansprüche

1. Maschinengestell für eine Schlagschneidevorrichtung, wobei das Maschinengestell (1) aufweist:
einen Werkzeugstützblock (4), und
einen Ständer (2) für eine Antriebseinheit, insbesondere für eine Beschleunigungseinheit der Schlagschneidevorrichtung,
**gekennzeichnet durch**
Verbindungseinrichtungen (8, 8', 8", 8"'), die eine dämpfende Verbindung zwischen dem Werkzeugstützblock (4) und einen Seitenfläche (3) des Ständers (2) herstellen,
wobei mittels der zumindest einen Verbindungseinrichtung (8, 8', 8", 8"') der Werkzeugstützblock (4) vom Ständer (2) schwingungsentkoppelt oder im Wesentlichen schwingungsentkoppelt ist, und
wobei der Werkzeugstützblock (4) und der Ständer (2) nicht-metallisch miteinander verbunden und/oder gekoppelt sind, insbesondere nicht miteinander verschweißt sind.

2. Maschinengestell nach Anspruch 1, wobei der Werkzeugstützblock (4) seitlich vom Ständer (2) angeordnet und eine Seitenfläche (3) des Ständers mit dem Werkzeugstützblock (4) verbunden ist.

3. Maschinengestell nach Anspruch 1 oder 2, wobei eine Verbindungsachse (B) der zumindest einer Verbindungseinrichtung (8, 8', 8", 8"') senkrecht oder im Wesentlichen senkrecht zur Seitenfläche (3) des Ständers (2) verläuft.

4. Maschinengestell nach Anspruch 1, wobei der Ständer (2) auf dem Werkzeugstützblock (4) angeordnet und eine Unterseite des Ständers mit dem Werkzeugstützblock (4) verbunden ist.

5. Maschinengestell nach Anspruch 4, wobei eine Verbindungsachse der Verbindungseinrichtung (8, 8', 8", 8"') senkrecht oder im Wesentlichen senkrecht zu einer Werkzeuglagerfläche (5) des Werkzeugstützblocks (4) liegt.

6. Maschinengestell nach einem der vorhergehenden Ansprüche, wobei die zumindest eine Verbindungseinrichtung (8, 8', 8", 8"') zumindest einen Bolzen (22) aufweist, der durch eine Öffnung im Ständer (2) mit dem Werkzeugstützblock (4) verbunden ist.

7. Maschinengestell nach einem der vorhergehenden Ansprüche, wobei die zumindest eine Verbindungseinrichtung (8, 8', 8", 8"') mit dem Werkzeugstützblock (4) oder dem Ständer (2) kraft-, form- und/oder stoffschlüssig verbunden ist.

8. Maschinengestell nach einem der vorhergehenden Ansprüche, wobei die Verbindungseinrichtung zumindest ein Gegenhaltelement aufweist, insbesondere zumindest eine Beilagscheibe (14, 14', 14", 14"').

9. Maschinengestell nach einem der vorhergehenden Ansprüche, wobei die Verbindungseinrichtung (8, 8', 8", 8"') zumindest ein erstes Dämpfungselement (10) aufweist, das zwischen oder im Wesentlichen zwischen Werkzeugstützblock (4) und Ständer (2) angeordnet ist.

10. Maschinengestell nach Anspruch 9, wobei sich das zumindest eine erste Dämpfungselement (10) und/oder sich zumindest ein zweites Dämpfungselement (12) auf einer vom Werkzeugstützblock (4) abgewandten Seite des Ständers (2) erstreckt.

11. Maschinengestell nach Anspruch 9 oder 10, wobei sich das zumindest eine erste Dämpfungselement (10) und/oder das zumindest eine zweite Dämpfungselement (12) zumindest teilweise entlang eines Umfangs der zumindest einen Verbindungseinrichtung (8, 8', 8", 8"') erstreckt, insbesondere einen Bolzen (22) der Verbindungseinrichtung (8, 8', 8", 8"') ummantelt.

12. Maschinengestell nach einem der Ansprüche 9, 10 oder 11, wobei ein Dämpfungselement (10, 12) aus einem elastischen Material, insbesondere einem gummiartigen Material, ausgebildet ist.

13. Maschinengestell nach einem der vorhergehenden Ansprüche, wobei der Werkzeugstützblock (4) auf einer Grundplatte (6) lagert oder eine Grundplatte aufweist, insbesondere starr mit der Grundplatte verbunden ist und wobei der Ständer (2) auf der Grundplatte (6) schwingungsentkoppelt oder im Wesentlichen schwingungsentkoppelt gelagert ist.

14. Maschinengestell nach Anspruch 12 oder 13, wobei zwischen der Grundplatte (6) und dem Ständer (2) zumindest eine weitere dämpfende Verbindungseinrichtung angeordnet ist, wobei insbesondere die zumindest eine weitere Verbindungseinrichtung zumindest eine Tellerfeder, ein Dämpfungskissen, insbesondere aus Metall, und/oder ein Federelement aufweist.

15. Schlagschneidevorrichtung mit einem Maschinengestell (1) nach einem der Ansprüche 1 bis 14.

## Claims

1. Machine frame for an impact cutting device, wherein the machine frame (1) comprises:
a tool support block (4), and
a stand (2) for a drive unit, in particular for an acceleration unit of the impact cutting device,
**characterized by**
connecting means (8, 8', 8", 8"') establishing a damping connection between the tool support block (4) and a side face (3) of the stand (2),
wherein the tool support block (4) is vibration-decoupled or substantially vibration-decoupled from the stand (2) by means of the at least one connecting means (8, 8', 8", 8"'), and
wherein the tool support block (4) and the stand (2) are non-metallically connected and/or coupled to each other, in particular not welded to each other.

2. Machine frame according to claim 1, wherein the tool support block (4) is disposed laterally from the stand (2) and a side face (3) of the stand is connected to the tool support block (4).

3. Machine frame according to claim 1 or 2, wherein a connection axis (B) of at least one connecting means (8, 8', 8", 8"') extends perpendicularly or substantially perpendicularly to the side face (3) of the stand (2).

4. Machine frame according to claim 1, wherein the stand (2) is disposed on the tool support block (4) and a bottom side of the stand is connected to the tool support block (4).

5. Machine frame according to claim 4, wherein a connection axis of the connecting means (8, 8', 8", 8"') is perpendicular or substantially perpendicular to a tool support surface (5) of the tool support block (4).

6. Machine frame according to any one of the preceding claims, wherein the at least one connecting means (8, 8', 8", 8"') comprises at least one bolt (22) connected to the tool support block (4) through an opening in the stand (2).

7. Machine frame according to any one of the preceding claims, wherein the at least one connecting means (8, 8', 8", 8"') is connected to the tool support block (4) or the stand (2) in force-fit, form-fit and/or bonded manner.

8. Machine frame according to any one of the preceding claims, wherein the connecting means comprises at least one counterholding element, in particular at least one washer (14, 14', 14", 14"').

9. Machine frame according to any one of the preceding claims, wherein the connecting means (8, 8', 8", 8"') comprises at least one first damping element (10), which is disposed between or substantially between tool support block (4) and stand (2).

10. Machine frame according to claim 9, wherein the at least one first damping element (10) and/or at least one second damping element (12) extends on a side of the stand (2) facing away from the tool support block (4).

11. Machine frame according to claim 9 or 10, wherein the at least one first damping element (10) and/or the at least one second damping element (12) extends at least partially along a circumference of the at least one connecting means (8, 8', 8", 8"'), in particular encases a bolt (22) of the connecting means (8, 8', 8", 8"').

12. Machine frame according to any one of claims 9, 10 or 11, wherein a damping element (10, 12) is formed of a resilient material, in particular a rubber-like material.

13. Machine frame according to any one of the preceding claims, wherein the tool support block (4) rests on a base plate (6) or comprises a base plate, in particular is rigidly connected to the base plate, and wherein the stand (2) is supported on the base plate (6) in vibration-decoupled or substantially vibration-decoupled manner.

14. Machine frame according to claim 12 or 13, wherein at least one further damping connecting means is disposed between the base plate (6) and the stand (2), wherein in particular the at least one further connecting means comprises at least a disk spring, a damping pad, in particular of metal, and/or a spring element.

15. Impact cutting device with a machine frame (1) according to any one of claims 1 to 14.

## Revendications

1. Bâti de machine pour un dispositif de coupe à percussion, sachant que le bâti de machine (1) présente :
un bloc support d'outil (4),
et un support (2) pour une unité d'entraînement, en particulier pour une unité d'accélération du dispositif de coupe à percussion,
**caractérisé par** des dispositifs de liaison (8, 8', 8", 8"'), qui réalisent une liaison d'amortissement entre le bloc support d'outil (4) et une face latérale (3) du support (2),
sachant qu'au moyen du ou des dispositifs de liaison (8, 8', 8", 8"'), le bloc support d'outil (4) est désaccouplé en vibrations ou essentiellement désaccouplé en vibrations par rapport au support (2),
et sachant que le bloc support d'outil (4) et le support (2) sont reliés et/ou accouplés entre eux de manière non métallique, en particulier ne sont pas soudés l'un à l'autre.

2. Bâti de machine selon la revendication 1, sachant que le bloc support d'outil (4) est disposé sur le côté du support (2) et qu'une face latérale (3) du support est reliée au bloc support d'outil (4).

3. Bâti de machine selon la revendication 1 ou 2, sachant qu'un axe de liaison (B) d'au moins un dispositif de liaison (8, 8', 8", 8"') s'étend perpendiculairement ou essentiellement perpendiculairement à la face latérale (3) du support (2).

4. Bâti de machine selon la revendication 1, sachant que le support (2) est disposé sur le bloc support d'outil (4) et qu'une face inférieure du support est reliée au bloc support d'outil (4).

5. Bâti de machine selon la revendication 4, sachant qu'un axe de liaison du dispositif de liaison (8, 8', 8", 8"') est perpendiculaire ou essentiellement perpendiculaire à une face de montage d'outil (5) du bloc support d'outil (4).

6. Bâti de machine selon l'une des revendications précédentes, sachant que le dispositif de liaison au moins unique (8, 8', 8", 8"') présente au moins un boulon (22) qui est relié au bloc support d'outil (4) à travers une ouverture dans le support (2).

7. Bâti de machine selon l'une des revendications précédentes, sachant que le dispositif de liaison au moins unique (8, 8', 8", 8"') est relié au bloc support d'outil (4) ou au support (2) à force, par complémentarité de forme et/ou par liaison de matière.

8. Bâti de machine selon l'une des revendications précédentes, sachant que le dispositif de liaison présente au moins un élément de contre-appui, en particulier au moins une rondelle de calage (14, 14', 14",

9. Bâti de machine selon l'une des revendications précédentes, sachant que le dispositif de liaison (8, 8', 8", 8"') présente au moins un premier élément d'amortissement (10), qui est disposé entre ou essentiellement entre le bloc support d'outil (4) et le support (2).

10. Bâti de machine selon la revendication 9, sachant que le premier élément d'amortissement au moins unique (10) et/ou au moins un deuxième élément d'amortissement (12) s'étendent sur un côté du support (2) qui est éloigné du bloc support d'outil (4).

11. Bâti de machine selon la revendication 9 ou 10, sachant que le premier élément d'amortissement au moins unique (10) et/ou le deuxième élément d'amortissement au moins unique (12) s'étendent au moins partiellement le long d'un pourtour du dispositif de liaison au moins unique (8, 8', 8", 8"'), en particulier enveloppent un boulon (22) du dispositif de liaison (8, 8', 8", 8"').

12. Bâti de machine selon l'une des revendications 9, 10 ou 11, sachant qu'un élément d'amortissement (10, 12) est formé d'un matériau élastique, en particulier d'un matériau du genre caoutchouc.

13. Bâti de machine selon l'une des revendications précédentes, sachant que le bloc support d'outil (4) est monté sur un socle (6) ou présente un socle, en particulier est rigidement relié au socle, et sachant que le support (2) est monté sur le socle (6) en étant désaccouplé en vibrations ou essentiellement désaccouplé en vibrations.

14. Bâti de machine selon la revendication 12 ou 13, sachant qu'au moins un dispositif de liaison amortisseur supplémentaire est disposé entre le socle (6) et le support (2), sachant notamment que le dispositif de liaison amortisseur supplémentaire au moins unique présente au moins une rondelle-ressort, un coussin amortisseur, en particulier en métal, et/ou un élément à effet de ressort.

15. Dispositif de coupe à percussion avec un bâti de machine (1) selon l'une des revendications 1 à 14.
